(19) Europäisches Patentamt
European Patent Office
Office européen des brevets

(11) Veröffentlichungsnummer: **0 019 088**
**B1**

(12) **EUROPÄISCHE PATENTSCHRIFT**

(45) Veröffentlichungstag der Patentschrift:
28.03.84

(51) Int. Cl.³: **G 01 N 21/21**, G 01 B 11/06

(21) Anmeldenummer: 80101993.6

(22) Anmeldetag: 14.04.80

(54) Ellipsometrisches Verfahren und ellipsometrische Vorrichtung zur Untersuchung der physikalischen Eigenschaften der Oberfläche einer Probe.

(30) Priorität: 17.04.79 SE 7903311

(43) Veröffentlichungstag der Anmeldung:
26.11.80 Patentblatt 80/24

(45) Bekanntmachung des Hinweises auf die Patenterteilung:
28.03.84 Patentblatt 84/13

(84) Benannte Vertragsstaaten:
AT BE CH DE FR GB IT LI LU NL

(56) Entgegenhaltungen:
JOURNAL OF PHYSICS E; SCIENTIFIC INSTRUMENTS, Band 6, Nr. 5, Mai 1973, London, GB, W.E.J. NEAL et al.: "Ellipsometry and its applications to surface examination", Seiten 409-416
OPTICS COMMUNICATION, Band 27, Nr. 1, Oktober 1978, Amsterdam, NL, A.R.M. ZAGHLOUL: "Modified O'Brian ellipsometer (MOE) for film-substrate systems", Seiten 1-3
JOURNAL OF PHYSICS E; SCIENTIFIC INSTRUMENTS, Band 9, Nr. 7, Juli 1976, London, GB, R.M.A. AZZAM: "Two-reflection null ellipsometer without a compensator", Seiten 569-572

(73) Patentinhaber: Stenberg, Johan Emanuel, Dr.-Ing., Hedelundsvägen 5, S-417 43 Göteborg (SE)
Patentinhaber: Stiblert, Lars Bertil, Övre Besvärsgatan 4, S-411 29 Göteborg (SE)
Patentinhaber: Sandström, Erland Torbjörn, Jungmansgatan 54, S-413 11 Göteborg (SE)

(72) Erfinder: Stenberg, Johan Emanuel, Dr.-Ing., Hedelundsvägen 5, S-417 43 Göteborg (SE)
Erfinder: Stiblert, Lars Bertil, Övre Besvärsgatan 4, S-411 29 Göteborg (SE)
Erfinder: Sandström, Erland Torbjörn, Jungmansgatan 54, S-413 11 Göteborg (SE)

(74) Vertreter: Liedl, Gerhard et al, Patentanwälte Liedl, Nöth Steinsdorfstrasse 21-22, D-8000 München 22 (DE)

Ellipsometrisches Verfahren und ellipsometrische Vorrichtung zur Untersuchung
der physikalischen Eigenschaften der Oberfläche einer Probe

Die Erfindung betrifft ein ellipsometrisches Verfahren nach dem Oberbegriff des Anspruchs 1 und eine ellipsometrische Vorrichtung nach dem Oberbegriff des Anspruchs 5.

Ellipsometerinstrumente zur Bestimmung der optischen Eigenschaften von Probenoberflächen arbeiten bekanntlich nach folgendem Prinzip: Paralleles monochromatisches Licht wird in einen Polarisator linear polarisiert. Sodann wird in einem Kompensator ein Phasenunterschied zwischen den Polarisationskomponenten des Lichtes erzeugt, so dass das Licht eine elliptische Polarisation erhält. Dieses elliptisch polarisierte Licht wird an einer Probenoberfläche zur Reflexion gebracht. Nach der Reflexion des Lichtes an der Probenoberfläche wird das Licht analysiert und aufgrund von Berechnungen lässt sich eine Auskunft über die Beschaffenheit der Probenoberfläche erzielen.

Wenn die Probenoberfläche als Substrat für einen dielektrischen Film dient, werden die Reflexionseigenschaften dieser Fläche beeinflusst. Hieraus lässt sich die Dicke und der Brechungsindex des Filmes berechnen, wenn man die optischen Konstanten des Substrates kennt. Die Genauigkeit der Bestimmung von Dicke und Brechungsindex ändert sich nach der Art des Substrates, dem Einfallswinkel und der Dicke des Films. Wird Silizium als Substrat verwendet und wählt man als Einfallswinkel der Strahlung auf die Probe 70°, so lässt sich die Dicke mit einer Messgenauigkeit von ±0,05 nm bestimmen.

Bei der Dickenmessung von dünnen Filmen ist es jedoch notwendig, dass die Dicke ungefähr bis auf eine halbe Wellenlänge der Strahlung bekannt ist, da die Einstellwinkel des Polarisators und des Analysators sich periodisch wiederholen. Hat man vor der Messung keinen ungefähren Anhaltspunkt für die Dickenbemessung, so ergeben sich Schwierigkeiten, da aus mehreren voneinander abweichenden Werten die richtigen ausgewählt werden müssen. Insofern benötigt man neben den mit dem Ellipsometer ermittelten Daten noch zusätzliche Angaben, mit deren Hilfe man entscheiden kann, welches der richtige Dickenwert innerhalb eines Multipletts mehrerer Messwerte ist.

Ein derart aufgebautes Ellipsometer hat daher nur eine begrenzte Verwendungsmöglichkeit. Obgleich das Ellipsometer relativ einfach aufgebaut ist, erweist sich der Messvorgang als relativ kompliziert, insbesondere deshalb, weil die Messwerte in Abhängigkeit von Polarisator- und Analysatoreinstellungen ermittelt werden müssen und danach noch umfassende Berechnungen notwendig sind, bis man die tatsächlichen Messwerte erhält.

Wenn, wie bei automatischen Ellipsometern mit Servo- und Computerausrüstung die manuelle Berechnungsarbeit entfällt, müssen jedoch aufwendige und komplizierte Apparate in Kauf genommen werden.

Ferner ist es bei einem eingangs erwähnten Verfahren und eingangs erwähnter Vorrichtung (aus «Journal of physics E», scientific instruments Vol. 9, Nr. 7 (1976), Seiten 569–572) bekannt, zwischen dem Polarisator und dem Analysator zwei Probenoberflächen mit gleichen Oberflächeneigenschaften so anzuordnen, dass die Einfallswinkel der Strahlung gleich sind. Bei einer derartigen Anordnung kann zwar ein beispielsweise als Viertelwellenlängenplatte ausgebildeter Kompensator entfallen, weil dessen Wirkung von der ersten reflektierenden Oberfläche übernommen wird, jedoch ist es bei einer derartigen Anordnung zur Durchführung der Messungen notwendig, den Polarisator und/oder Analysator zu verstellen oder zwischen den beiden Proben einen zusätzlichen verstellbaren Hilfspolarisator einzusetzen oder die Einfallswinkel der Strahlung auf die beiden Probenoberflächen zu verändern. Dies bedingt einen relativ hohen Aufwand bei der Einstellung der Bestandteile der ellipsometrischen Vorrichtung bzw. bei der Durchführung des ellipsometrischen Verfahrens.

Aufgabe der Erfindung ist es demgegenüber, ein Verfahren und eine Vorrichtung der eingangs genannten Art zu schaffen, bei denen beim Bestrahlen der Probe ohne zusätzliche Verstellung der Ellipsometerbestandteile unmittelbar ein Messergebnis zur Verfügung steht.

Diese Aufgabe wird verfahrensgemäss durch die im Kennzeichen des Anspruchs 1 und vorrichtungsgemäss durch die im Kennzeichen des Anspruchs 5 angegebenen Merkmale gelöst.

Bei der Erfindung wird die polarisierte Strahlung sowohl an einer Referenzoberfläche als auch an der Probenoberfläche reflektiert, wobei die Strahlung auf beide Oberflächen nicht nur mit dem gleichen Einfallswinkel einfällt, sondern die reflektierte Strahlung der einen Oberfläche auf die andere Oberfläche so gerichtet ist, dass die Polarisationskomponente bzw. die Schwingungsrichtung des Strahlungsanteils der von der einen auf die andere Oberfläche reflektierten Strahlung, welche der Einfallsebene an dieser reflektierenden Oberfläche parallel ist, zur Einfallsebene an der anderen reflektierenden Oberfläche in einem rechten Winkel liegt.

Anhand der beiliegenden Figuren soll die Erfindung noch näher erläutert werden. Es zeigen:

Fig. 1 schematisch ein Ausführungsbeispiel der Erfindung;

Fig. 2 einen Versuchsaufbau;

Fig. 3 eine photographische Aufnahme einer Probe, auf der verschiedene Metallschichten aufgebracht sind;

Fig. 4 eine photographische Aufnahme von Messergebnissen unter Zuhilfenahme eines Ellipsometers;

Fig. 5 eine photographische Aufnahme eines Versuchsergebnisses bei der Dickenbestimmung eines Films mit Hilfe eines Ausführungsbeispiels der Erfindung;

Fig. 6 ein weiteres Anwendungsbeispiel;

Fig. 7 Messergebnis für ein Dickenprofil bei einer immunbiologischen Reaktion mit Hilfe eines bekannten Ellipsometers und

Fig. 8 Messergebnis hierfür mit Hilfe eines Ausführungsbeispiels der Erfindung.

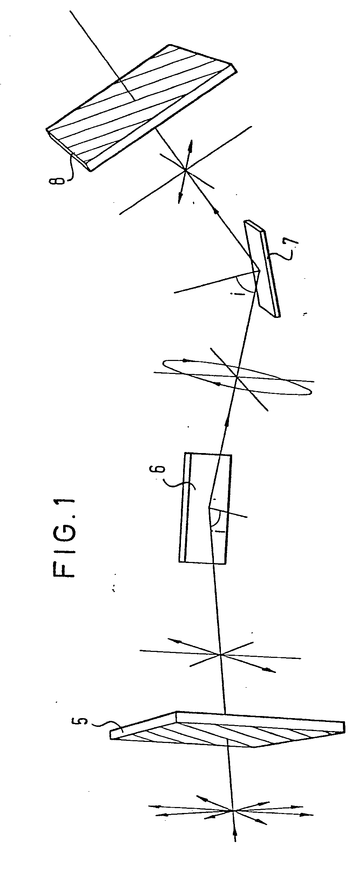

Bei dem in der Fig. 1 gezeigten Ausführungsbeispiel wird ein einfallendes paralleles Strahlenbündel, z.B. weisses Licht, in –45° mit Hilfe eines Polarisators 5 polarisiert. Danach trifft die Strahlung gegen eine Referenzoberfläche 6 und wird von dieser reflektiert. Das von der Referenzoberfläche 6 reflektierte Licht ist elliptisch polarisiert in Abhängigkeit von der Art der Referenzoberfläche 6, welche sich ändernde bekannte Reflexionseigenschaften aufweist. Die Probenoberfläche 7 ist so angeordnet, dass das Licht mit demselben Einfallswinkel i gegen die Probenoberfläche auftrifft wie gegen die Referenzoberfläche 6. Beim dargestellten Ausführungsbeispiel ist jedoch an der Probenoberfläche 7 die Einfallsebene senkrecht zur Einfallsebene an der Referenzoberfläche 6. Wenn die Referenzoberfläche 6 und die Probenoberfläche 7 identische Beschaffenheit haben, werden die beiden Komponenten des polarisierten Lichtes in den gleichen Reflexionswinkeln reflektiert. Das bedeutet, dass das von der Probenoberfläche 7 reflektierte Licht erneut linear polarisiert ist. Dieses polarisierte Licht wird durch einen Analysator 8 geleitet, dessen Polarisationsrichtung im rechten Winkel zu der Polarisationsrichtung des Polarisators 5 angeordnet ist. Im Analysator 8 wird daher der Anteil des Lichtes gelöscht, in welchem die optischen Reflexionseigenschaften der Referenzoberfläche 6 und der Probenoberfläche 7 gleich sind. Wann weisses Licht verwendet wird bzw. eine Strahlung innerhalb eines bestimmten Wellenlängenbereiches, erfolgt bei Gleichheit eine totale Löschung für alle Wellenlängen.

Man erhält dann auch für die Probenoberfläche 7 eine entsprechende Aussage hinsichtlich unterschiedlicher optischer Eigenschaften dieser Probenoberfläche.

Bei der Erfindung kommt man ohne einen Kompensator, der beispielsweise als Viertelwellenlängenplatte ausgebildet ist, aus. Das bedeutet, dass die Strahlung nicht monochromatisch sein muss, sondern es lässt sich eine Strahlung innerhalb eines bestimmten Wellenlängenbereiches, beispielsweise weisses Licht, verwenden. Hieraus ergeben sich wesentliche Vorteile bei der Dickenmessung von dünnen Filmen. Wenn hierzu die Referenzoberfläche 6 mit einem Film bekannter gleichmässiger Dicke überzogen wird oder die Filmdicke in bekannter Weise sich ändert, erhält man bei der Untersuchung der Probenoberfläche, z.B. bei Zuhilfenahme einer photographischen Aufnahme ein schwarzes Band an der Stelle des abgebildeten Musters der Probenoberfläche, an der die Dicke der Schicht auf der Probenoberfläche mit der Dicke der bekannten Schicht auf der Referenzoberfläche übereinstimmt. Wenn bei unterschiedlichen Dicken Übereinstimmungen der Filme auf der Probenoberfläche und der Referenzoberfläche vorhanden sind, ergibt sich bei der photographischen Abbildung eine entsprechende Anzahl an schwarzen Bändern.

Zu beiden Seiten des schwarzen Bandes, das das Mass für die entsprechende Dicke ist, erscheinen farbige Bänder je nach Löschung der einzelnen Wellenlängenkomponenten des weissen Lichtes. Die Unterscheidung des schwarzen Bandes von den farbigen Bändern lässt sich leicht durchführen. Bei Verwendung von monochromatischem Licht, an welches man bei der Verwendung der bekannten Ellipsometrie gebunden ist, treten mehrere schwarze Bänder auf, von denen das der zu ermittelnden Filmdicke gehörige Band erst durch besondere zusätzliche Auswertemassnahmen ermittelt werden muss.

Die Erfindung schafft die Möglichkeit, die Probenoberfläche 7 direkt untersuchen zu können, wodurch eine wesentliche Erleichterung des Messvorganges erzielt wird. Wenn z.B. auf der Referenzoberfläche 6 eine Schicht mit einer in einer Richtung, beispielsweise linear sich ändernden Dicke, vorhanden ist, können auf der Probenoberfläche 7 Dickenänderungen längs der Probenoberfläche, beispielsweise mittels eines Okulars, untersucht und festgestellt werden. Es lässt sich hiervon beispielsweise eine photographische Aufnahme machen und man erhält eine Kurve, die die Dicke als Funktion beispielsweise des Abstandes von einem bestimmten Ausgangspunkt längs der Probenfläche zeigt.

Ferner wird das Messverfahren noch dadurch erleichtert, dass der Polarisator 5 und der Analysator 8 nicht beweglich sein müssen.

Die direkte Untersuchungsmöglichkeit der Probenoberfläche 7 schafft auch die Voraussetzung für die Analyse von Flächen, beispielsweise für den Vergleich von verschiedenen Oberflächenlegierungen.

In der Fig. 1 ist eine einfache Ausführungsform der Erfindung dargestellt. Jedoch ist es auch möglich, dass man zwischen der Referenzoberfläche 6 und der Probenoberfläche 7 eine optische Komponente einsetzt, z.B. ein Prisma, das die Polarisationsrichtung des Lichtes zwischen diesen beiden Oberflächen um 90° dreht. Hierdurch ist es möglich, dass der Strahlengang in der gleichen Ebene, beispielsweise in der gleichen Einfallsebene, verläuft. Mit Hilfe eines total reflektierenden Prismas kann beispielsweise der Strahlengang so verlaufen, dass die Referenzoberfläche 6 und die Probenoberfläche 7 in der gleichen Ebene, beispielsweise auf einem Tisch, angeordnet werden können. Diese Anordnung ist auch dann von Vorteil, wenn beide Oberflächen aus Flüssigkeitsoberflächen gebildet werden. Ausserdem lässt sich auf diese Weise eine kompakte Anordnung erzielen.

Bei der Arbeitsweise der Erfindung ist man nicht an die Wellenlänge der Strahlung gebunden. Insofern kann diese für die ellipsometrische Spektroskopie ausgenutzt werden. Dies kann in der Weise erfolgen, dass die Wellenlänge längs der einen Seite der Probenoberfläche 7 geändert wird, so dass man direkt sieht, wie die Oberflächeneigenschaften wellenlängenabhängig sind. Dies ist insbesondere bei der Untersuchung der Absorption in einer dünnen Schicht von Vorteil, die einen Farbstoff enthält.

Die Erfindung ist auch nicht auf die Anwendung des Wellengebietes des sichtbaren Lichtes begrenzt, sondern es kann auch elektromagnetische Strahlung mit anderen Wellenlängen zur Anwendung kommen. Hierzu werden dann zusätzliche Vorrichtungen vorgesehen, durch die in Abhängigkeit von der Art der Strahlung bzw. der Wellenlänge der Strahlung eine Umwandlung in sichtbares Licht erfolgt. Beispielsweise lassen sich Bildwandler für Infrarotstrahlung in sichtbares Licht verwenden.

Durch die Erfindung wird die Möglichkeit geschaffen, Reflexionseigenschaften zweier Oberflächen für elektromagnetische Strahlung miteinander zu vergleichen. Auf diese Weise lassen sich physikalische Eigenschaften einer Probenoberfläche untersuchen und messen. Dies erfolgt durch Vergleich mit einer Referenzoberfläche, die bekannte physikalische Oberflächeneigenschaften aufweist. Bei der Erfindung wird dabei die Erkenntnis ausgenutzt, dass bei isotropischen Oberflächen, die optisch nicht aktiv sind, zwei Polarisationskomponenten (die zur Einfallsebene parallele und senkrechte Polarisationskomponente) des Lichtes unabhängig voneinander reflektiert werden.

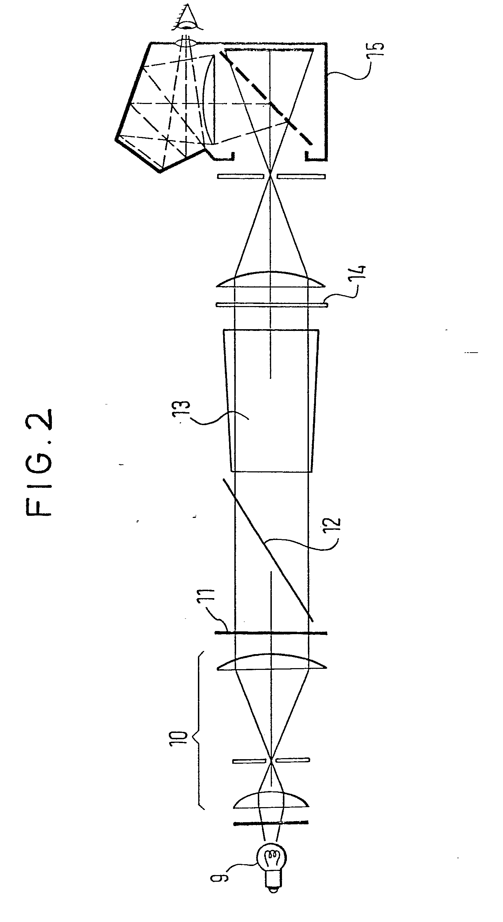

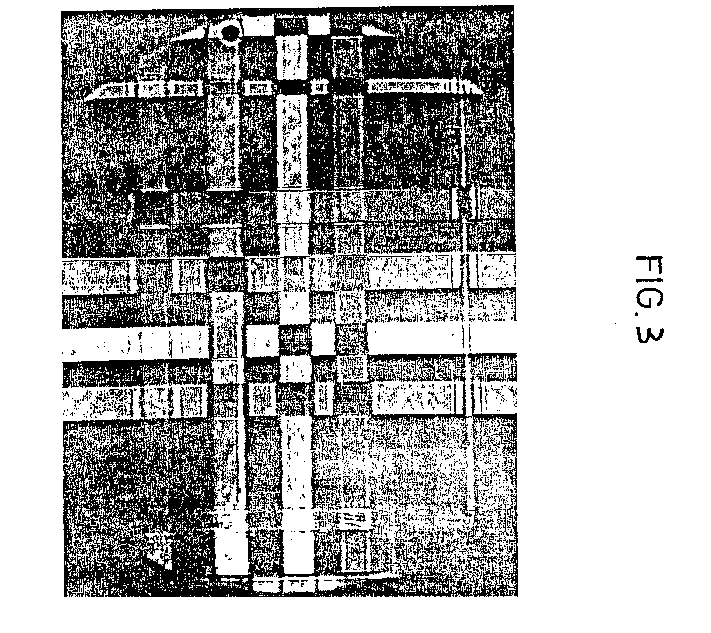

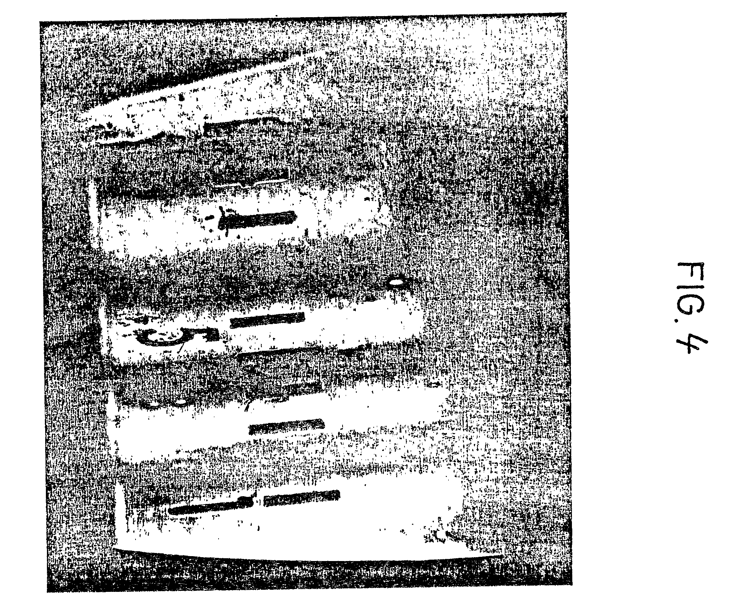

In der Fig. 2 ist schematisch eine Versuchsanordnung gezeigt, die, in Strahlenrichtung gesehen, eine Lampe 9, einen Kollimator 10, einen Polarisator 11, eine Referenzobefläche 12, eine Probenoberfläche 13, einen Analysator 14 und eine Kamera 15 aufweist. Mit einer derartigen Versuchsanordnung wurde eine Metalloberflächenanalyse durchgeführt, deren Ergebnis in der Fig. 4 wiedergegeben ist. Für die Versuchsdurchführung wurde ein Goldfilm mit 100 nm Dicke auf einem Mikroskopschlitten aufgedampft. Auf diesem Film wurden Silber-, Aluminium-, Chrom- und Nickelstreifen unter Verwendung einer geeigneten Maskentechnik mit gleichen Abständen voneinander aufgedampft. Es war nicht möglich, zwischen den Silber- und Aluminiumstreifen bzw. zwischen dem Chrom- und Nickelstreifen mit blossem Auge zu unterscheiden. Mit Hilfe der in der Fig. 2 gezeigten Versuchsanordnung war es möglich, die in der Fig. 3 gezeigte photographische Aufnahme zu machen, wobei die Goldschicht als schwarzer Hintergrund in Erscheinung tritt und von links und von unten in der Figur die Silber-, Aluminium-, Chrom- und Nickelstreifen deutlich zu erkennen sind. Gleiche Ergebnisse lassen sich mit Legierungen mit ähnlichen Eigenschaften erzielen.

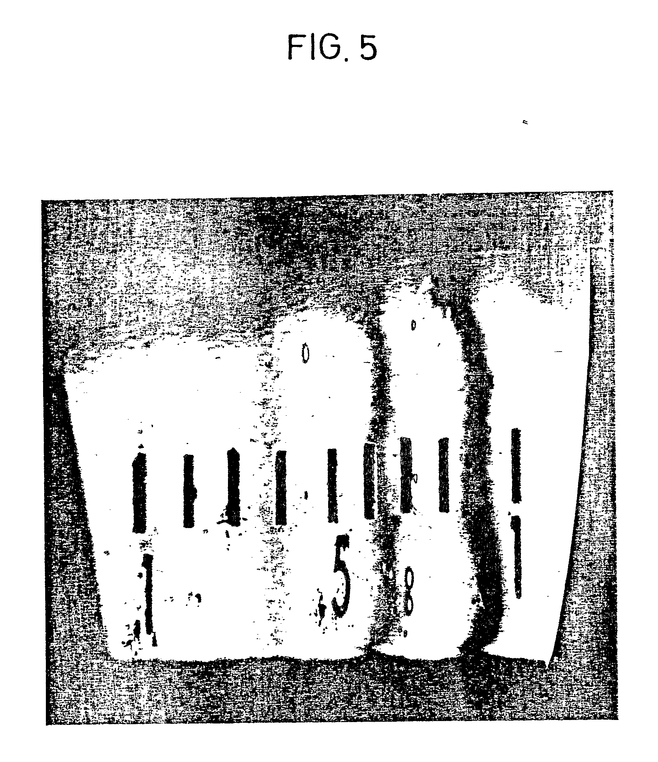

Die Figuren 4 und 5 zeigen Ergebnisse bei der Filmdickenmessung an $SiO_2$-Filmen. Als Referenzoberfläche wurde ein 1 μm dicker $iO_2$-Film auf einer Siliziumunterlage verwendet. In der Fig. 5a sind die Messergebnisse mit einem Ellipsometer dargestellt, bei dem monochromatisches Licht verwendet wurde. Wie die Figur zeigt, erhält man vier Banden, von denen eine das tatsächliche Mass für die Filmdicke angibt. Es müssen daher noch zusätzliche Auswertungsvorgänge durchgeführt werden, um die tatsächliche Filmdicke festzustellen.

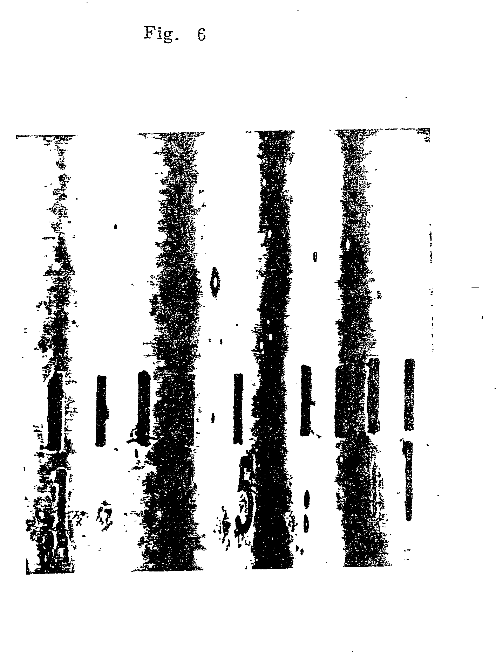

Wie die Fig. 5 zeigt, erhält man im Gegensatz dazu bei der Erfindung direkt eine Bande, die das Mass für die Filmdicke darstellt. Durch entsprechende Skalierung lässt sich somit eine direkte Ablesung gewinnen. Die Auslösung des Lichts bzw. die schwarze Bande ergibt sich aus dem gleichen Refraktionsindex von Referenzoberfläche und Probenoberfläche. Es hat sich jedoch herausgestellt, dass mit Hilfe eines $SiO_2$-Films als Referenzoberfläche mit einem Refraktionsindex von etwa 1,46 auch die Dicke von organischen Filmen mit Refraktionsindizes von etwa 1,50 gemessen werden können. Aus der Fig. 6 ist zu ersehen, dass mit Hilfe eines $SiO_2$-Films als Referenzoberfläche die Dicke von dünnen Filmen aus Photolack gemessen werden konnte, wie die Fig. 6 zeigt.

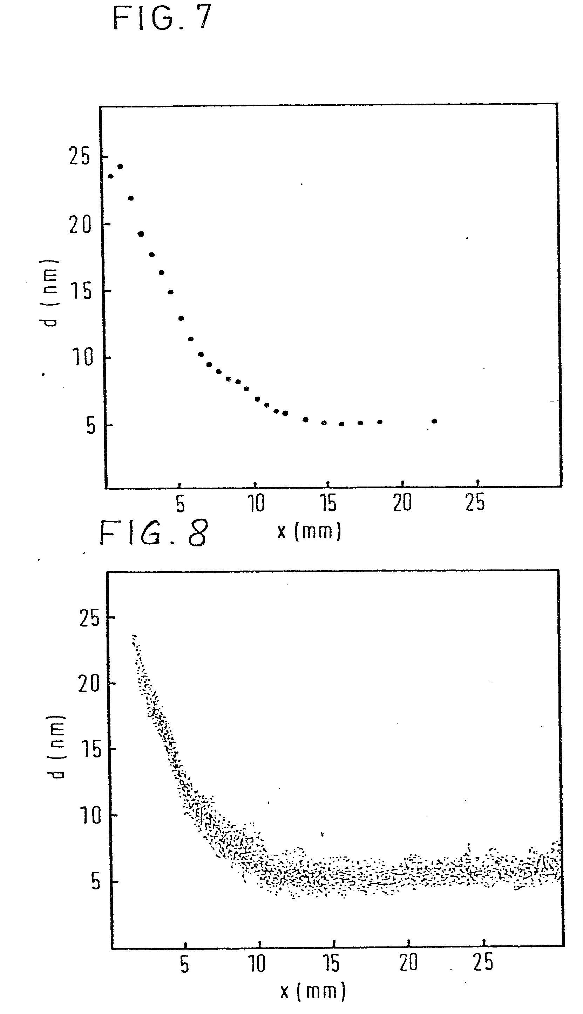

In der Fig. 7 ist eine Kurvendarstellung gezeigt für ein Profil, das bei einer immunbiologischen Reaktion entstanden ist, die mit Hilfe eines herkömmlichen Ellipsometers gewonnen wurde, wobei für jeden Punkt dieser Darstellung etwa 5 Minuten Messzeit erforderlich waren. Zur Gewinnung der gesamten Kurve waren etwa 2 Stunden notwendig. Die Kurvendarstellung in der Fig. wurde mit Hilfe der Erfindung (Vergleichsellipsometer) ermittelt und konnte mit einer Kamera aufgezeichnet werden, d. h., mit Hilfe der Erfindung hat sich das Profil direkt ermitteln lassen. Als Vergleichsoberfläche wurde ein $SiO_2$-Film, dessen Dicke von 2–25 mm entlang einer Strecke von 20 mm linear sich änderte. Das bedeutet, dass auch organische monomolekulare Schichten untersucht werden können.

Mit Hilfe der Erfindung lässt sich eine direkte Untersuchung der physikalischen Oberflächeneigenschaften dadurch erzielen, dass von der Probenoberfläche ein Bild gewonnen werden kann, in welchem die Bereiche, deren Eigenschaften mit denen der Referenzoberfläche gleich sind, dunkel in Erscheinung treten. Die Untersuchungen lassen sich nicht nur im Bereich des weissen Lichtes, sondern auch im UV- und IR-Bereich durchführen. Die Verwendung bei der ellipsometrischen Spektroskopie ist ebenfalls möglich. Das Anwendungsspektrum ist breit gestreut und reicht von immunbiologischen Untersuchungen bis zu Oberflächenuntersuchungen bei der Halbleiterherstellung.

**Patentansprüche**

1. Ellipsometrisches Verfahren zur Untersuchung der physikalischen Eigenschaften der Oberfläche einer Probe oder einer bzw. eines auf einer Oberfläche vorhandenen Schicht oder Films, bei dem die von einem Polarisator (5) polarisierte Strahlung an zwei Oberflächen (6, 7) mit gleichen Einfallswinkeln (i) zur Reflexion gebracht wird und die, in Strahlungsrichtung gesehen, von der zweiten Oberfläche (7) reflektierte Strahlung für den Strahlungsanteil, der den gleichen Polarisationszustand aufweist wie vor der ersten Reflexion durch einen Analysator (8) gelöscht wird, dadurch gekennzeichnet, dass für die eine Oberfläche (6) eine Referenzoberfläche mit bekannten Reflexionseigenschaften und für die andere Oberfläche (7) die zu untersuchende Probenoberfläche verwendet werden, und dass entweder die beiden Oberflächen (6, 7) so angeordnet werden, dass ihre Einfallsebenen senkrecht zueinander stehen, oder dass ein optisches Element vorgesehen wird, durch das die Polarisationsrichtung der Strahlung zwischen den beiden Oberflächen um 90° gedreht wird.

2. Verfahren nach Anspruch 1, dadurch gekennzeichnet, dass linear polarisierte Strahlung verwendet wird.

3. Verfahren nach Anspruch 1 oder 2, dadurch gekennzeichnet, dass weisses Licht verwendet wird oder die Wellenlänge der Strahlung geändert wird.

4. Verfahren nach einem der Ansprüche 1 bis 3, dadurch gekennzeichnet, dass linear polarisierte Strahlung zuerst auf die Referenzoberfläche (6) und von der Referenzoberfläche (6) reflektierte elliptisch polarisierte Strahlung auf die Probenoberfläche (7) gerichtet wird.

5. Ellipsometrische Vorrichtung mit einem Polarisator (5) und einem Analysator (8), zwischen denen zwei reflektierende Oberflächen (6, 7) angeordnet sind, an denen eine vom Polarisator (5) linear polarisierte Strahlung mit gleichen Einfallswinkeln zur Reflexion gebracht wird, dadurch gekennzeichnet, dass die eine Oberfläche (6) als Referenzoberfläche mit bekannten Reflexionseigenschaften und die andere Oberfläche (7) als zu untersuchende Probenoberfläche ausgebildet sind und dass entweder die beiden Oberflächen (6, 7) so angeordnet sind, dass ihre Einfallsebenen senkrecht zueinander stehen oder dass zwischen den beiden Oberflächen (6, 7) ein optisches Element angeordnet ist, durch das die Polarisationsrichtung der Strahlung zwischen den beiden Oberflächen (6, 7) um 90° gedreht ist.

6. Vorrichtung nach Anspruch 5, dadurch gekennzeichnet, dass ein linear polarisiertes Licht erzeugender Polarisator (5) verwendet wird.

7. Vorrichtung nach Anspruch 5 oder 6, dadurch gekennzeichnet, dass die linear polarisierte Strahlung zuerst auf die Referenzoberfläche (6) und die von der Referenzoberfläche (6) reflektierte elliptisch polarisierte Strahlung auf die Probenoberfläche (7) gerichtet ist.

8. Vorrichtung nach einem der Ansprüche 5 bis 7, dadurch gekennzeichnet, dass der Polarisator (5) und der Analysator (8) fest eingestellt sind.

9. Vorrichtung nach einem der Ansprüche 5 bis 8, dadurch gekennzeichnet, dass die Referenzoberfläche (6) eine Oberflächenschicht unterschiedlicher Zusammensetzung oder Dicke aufweist.

**Claims**

1. An ellipsometric method of studying the physical properties of the surface of a testpiece or a layer or film on a surface, wherein the radiation which is polarized by a polarizer (5) is reflected at two surfaces (6, 7), with the same angles (i) of indicence, and the radiation which is reflected by the second surface (7), as viewed in the direction of radiation, is extinguished by an analyzer (8), in respect of the radiation component which is of the same state of polarization as before the first reflection, characterised in that a reference surface having known reflection properties is used for the one surface (6) and the testpiece surface which is to be studied is used for the other surface (7), and that either the two surfaces (6, 7) are so arranged that their planes of incidence are normal to each other or an optical element is provided, which rotates the direction of polarization of the radiation through 90° between the two surfaces.

2. A method according to claim 1 characterised in that linearly polarized radiation is used.

3. A method according to claim 1 or 2 characterised in that white light is used or the wavelength of the radiation is altered.

4. A method according to one of claims 1 to 3 characterised in that linearly polarized radiation is first directed onto the reference surface (6) and the elliptically polarized radiation reflected by the reference surface (6) is directed onto the testpiece surface (7).

5. An ellipsometric apparatus comprising a polarizer (5) and an analyzer (8) between which are arranged two reflecting surfaces (6, 7) at which a radiation which is linearly polarized by the polarizer (5) is reflected, with the same angles of incidence, characterised in that the one surface (6) is formed as a reference surface with known reflection properties and the other surface (7) is formed as the testpiece surface to be studied, and that either the two surfaces (6, 7) are so arranged that their planes of incidence are normal to each other or an optical element is disposed between the two surfaces (6, 7), which rotates the direction of polarization of the radiation through 90°, between the two surfaces (6, 7).

6. Apparatus according to claim 5 characterised in that a polarizer (5) which produces linearly polarized light is used.

7. Apparatus according to claim 5 or claim 6 characterised in that the linearly polarized radiation is first directed onto the reference surface (6) and the elliptically polarized radiation reflected by the references surface (6) is directed onto the testpiece surface (7).

8. Apparatus according to one of claims 5 to 7 characterised in that the polarizer (5) and the analyzer (8) are fixedly set.

9. Apparatus according to one of claims 5 to 8 characterised in that the reference surface (6) has a surface layer of different composition or thickness.

**Revendications**

1. Procédé ellipsométrique permettant d'analyser les propriétés physiques de surface d'un échantillon ou d'une couche et/ou d'un film déposés sur une surface, dans lequel le faisceau polarisé par un polariseur (5) est réfléchi sur deux surfaces (6, 7) avec le même angle d'incidence (i), la composante du faisceau réfléchi par la seconde surface (7), vu dans le sens de marche des rayons, dont l'état de polarisation est le même qu'avant la première réflexion, étant éteinte par un analyseur (8), caractérisé en ce que la première surface (6) constitue la surface de référence, dont les propriétés de réflexion sont connues, la seconde surface (7) étant la surface de l'échantillon à analyser, et en ce que l'orientation des deux surfaces (6, 7) est telle, que leurs plans d'incidence sont perpendiculaires, ou en ce qu'un élément optique modifie de 90° la direction de polarisation du faisceau entre les deux surfaces.

2. Procédé selon la revendication 1, caractérisé en ce que le faisceau est polarisé rectilignement.

3. Procédé selon une des revendications 1 et 2, caractérisé par l'utilisation de la lumière blanche ou la modification de la longueur d'onde du faisceau.

4. Procédé selon une quelconque des revendications 1 à 3, caractérisé en ce que le faisceau polarisé rectilignement est d'abord réfléchi sur la surface de référence (6), puis dirigé à l'état de polarisation elliptique sur la surface de l'échantillon (7).

5. Dispositif ellipsométrique comportant un polariseur (5) et un analyseur (8), entre lesquels sont placées deux surfaces (6, 7) réfléchissant sous le même angle d'incidence un faisceau polarisé rectilignement par le polariseur (5), caractérisé en ce que la première surface (6), dont les propriétés de réflexion sont connues, constitue la surface de référence, la seconde surface (7) étant la surface de l'échantillon à analyser, et en ce que l'orientation des deux surfaces (6, 7) est telle, que leurs plans d'incidence sont perpendiculaires, ou en ce qu'un élément optique, placé entre ces deux surfaces (6, 7), modifie de 90° la direction de polarisation du faisceau.

6. Dispositif selon la revendication 5, caractérisé par l'utilisation d'un polariseur (5) donnant une lumière polarisée rectilignement.

7. Dispositif selon une des revendications 5 et 6, caractérisé en ce que le faisceau polarisé rectilignement est d'abord réfléchi par la surface de référence (6), puis dirigé à l'état de polarisation elliptique sur la surface de l'échantillon (7).

8. Dispositif selon une quelconque des revendications 5 à 7, caractérisé en ce que le polariseur (5) et l'analyseur (8) sont fixes.

9. Dispositif selon une quelconque des revendications 5 à 8, caractérisé en ce que la surface de référence (6) présente une couche superficielle d'épaisseur ou de composition variable.

FIG.1

# FIG.2

# FIG. 3

0019088

# FIG. 4

FIG. 5

Fig. 6

0019088

FIG. 7

FIG. 8

19